# EUROPEAN PATENT APPLICATION

(11) **EP 1 715 468 A1**
(43) Date of publication of application: **25.10.2006**
(21) Application number: 05766431.0
(22) Date of filing: 21.07.2005
(51) Int. Cl.: G09F 3/04, B23K 26/18, B23K 26/20, B29C 65/16

(54) **LABEL FOR LASER WELDING AND COMPOSITE MOLDING**

(30) Priority: 22.07.2004 JP 2004214693
(71) Applicant: Daicel Polymer Ltd., Tokyo 108-8231 (JP); ORIENT CHEMICAL INDUSTRIES, LTD., Osaka-shi, Osaka 535-0022 (JP)
(72) Inventor: ITAKURA, Masahiko, Daicel Polymer, Ltd., Tokyo 1088231 (JP); OKUMURA, Yasuo, Daicel Polymer, Ltd., Tokyo 1088231 (JP); OOE, Yuichi, Sajai-shi, Osaka 5900905 (JP); HATASE, Yoshiteru, Orient Chemical Industries, Ltd, Neyagawa-shi, Osaka 5728581 (JP)
(74) Representative: Grünecker, Kinkeldey, Stockmair & Schwanhäusser Anwaltssozietät
(86) International application number: PCT/JP2005/013374
(87) International publication number: WO 2006/009200

(57) **Abstract**

The laser-transmissive welding label of the present invention is a resin label which comprises at least a resin layer and is affixable to a resin shaped article by a laser welding, wherein the resin layer has a light-scattering property, and the transmittance of the resin layer relative to a laser beam having an oscillation wavelength within the range of 740 to 1100 nm is not less than 20%, and the total light transmittance of the resin layer relative to a visible light (in accordance with ASTM D1003) is not more than 50%. The resin layer may comprise a thermoplastic resin which may have a compatibility with a resin for the resin shaped article. The label may be able to mask the resin shaped article, or may be colored with a coloring agent. A shaped composite article (e.g., a toner cartridge) may be formed by bonding the label to the resin shaped article with use of the laser welding. The present invention provides the resin label which is affixable to the resin shaped article in an easy and simple way, without an adhesive.

## Description

### TECHNICAL FIELD

The present invention relates to a label useful for affixing or bonding to a resin shaped article (shaped resin article) by a laser welding, and to a shaped composite article (composite shaped article) in which the label is bonded (or affixed or attached) to the resin shaped article.

### BACKGROUND ART

In the past, a label having one surface which is printed and the other surface on which a release paper is affixed with an adhesive has been used for a shaped article (molded product) such as a resin shaped article. However, in such a form, many processes are necessary for producing the label. In addition, in order to affix or attach the label to the shaped article, it is necessary to peel off the release paper from the label as well as to position (or align) the label on the shaped article, resulting in remarkably complicated procedures. Moreover, releasing (or peeling) the label from the shaped article confronts the difficulty of recycle of a labeled shaped article.

Therefore, a shaped article is under consideration, which is easily reusable or recyclable even when a label is affixed thereto. For example, Japanese Patent Laid-Open No. 43177/2000 (JP-2000-43177A) (Patent Document 1) discloses a recyclable resin shaped article which comprises a resin shaped article body (e.g., an upper cover of a toner magazine), and a display label detachably affixed to the body with a weak adhesive, wherein a material of the label is compatible with a molding resin material of the body.

Japanese Patent Laid-Open No. 340182/1996 (JP-8-340182A) (Patent Document 2) discloses a product having a recyclable part of a thermoplastic resin, wherein the product is provided with a decal (a sheet-like piece) and a display member (a sheet-like member). The decal comprises a thermoplastic resin compatible with the recyclable part, is adhered to the recyclable part, and indicates a mark showing that the part is recyclable without releasing the decal; and the display member expresses the meanings of the mark. The Patent Document 2 discloses that the decal is attached to a front door of a copying machine by a thermal fusing or an adhesion with an adhesive.

Japanese Patent Laid-Open No. 119169/1998 (JP-10-119169A) (Patent Document 3) discloses an recyclable article which comprises a first article, and a second article bonded to the first article via an adhesive member (material), wherein the first and second articles comprise thermoplastic resins which are compatible with each other, and the adhesive material has a characteristic to decrease an adhesive strength to the first article by applying a heat and/or an electromagnetic wave (e.g., an ultraviolet wave).

Japanese Patent Laid-Open No. 109831/1999 (JP-11-109831A) (Patent Document 4) discloses an image-forming apparatus comprising a display member with a recycle information regarding an object part, wherein the display member comprises a plurality of items such as the name of material of each part constituting the image-forming apparatus or the recycling property as the part for selecting and displaying altogether. Moreover, concerning the parts made of a resin, Patent Document 4 discloses to form the display member by affixing a decal to the object part. Incidentally, Patent Document 4 does not mention details of affixing method.

With respect to an external cover with which an apparatus is provided, Japanese Patent Laid-Open No. 66607/2000 (JP-2000-66607A) (Patent Document 5) discloses an external cover for recycling, wherein the external cover is provided with an external over base and a releasable transparent film on the outside surface thereof. Moreover, Patent Document 5 discloses that a material for the transparent film may have a compatibility with a material for the external cover base with each other, and that in the case of using an adhesive for lamination, a material for the transparent film, a material for the external cover base, and the adhesive has a compatibility with each to each.

However, in the case of using a binding agent or an adhesive (or an agglutinant) for binding the label to the shaped article, the label must be peeled off from the shaped article prior to recycling. In addition, the adhesive is liable to remain on the surface of the shaped article, resulting in deterioration in quality of a recycled article. Moreover, heat-fusing labelingmakes positioning of the label difficult as same as in the case using an adhesive. Further, there is a possibility to impair the appearance of the shaped article due to fusing a surrounding resin of the label, and it is also difficult to employ the heat-fusing affixation to a shaped article having a complicated configuration.

Japanese Patent Laid-Open No. 181931/2003 (JP-2003-181931A) (Patent Document 6) discloses a method to bond thermoplastic transparent resin members with a laser beam, which comprises superposing a plurality of thermoplastic transparent resin members which are unabsorptive to a laser beam with interposing a very thin transparent film which is absorptive to a laser beam (e.g. , an infrared absorptive transparent film) between the thermoplastic transparent resin members which are adjacent with each other, and welding the thermoplastic transparent resin members by irradiating a laser beam on the outside surface of the exterior transparent resin member. The document also discloses that a pigment or dye which is absorbable to an infrared light and transmittable to a visible light maybe added to the transparent film. However, since the transparent resin member is used in Patent Document 6, the resin member cannot effectively mask a substrate (base), even in using the resin member as a label. On the contrary, in the case of using the label for masking the substrate (base), the label (resin member) cannot validly transmit a laser beam, and liable to reduce the bonding strength between the label and the substrate.

Japanese Patent Laid-Open No. 198982/2001 (JP-2001-198982A) (Patent Document 7) discloses a production process of a decorative plastic shaped article in which a decorative transparent resin panel and a colored resin shaped article are welded into one piece, wherein the process comprises bringing the decorative transparent resin panel with a colored layer having a laser transmittance of 70.0 to 100% and a total light transmittance of not more than 60% in contact with the colored resin shaped article having a laser transmittance of 0 to 10%, and irradiating a laser beam onto the colored layer of the decorative transparent resin panel to weld the interface between the back surface of the decorative transparent resin panel and the front surface of the colored resin shaped article. However, Patent Document 7 does not disclose a labeling property for efficiently adjusting a masking degree (masking property) of the resin shaped article as a base without deteriorating in the laser weldability.
[Patent Document 1] JP-2000-43177A (Claim 1, and Paragraph No. [0026])
[Patent Document 2] JP-8-340182A (Claims 1 and 2, Paragraph Nos. [0002], [0026], and [0033])
[Patent Document 3] JP-10-119169A (Claim 1, Paragraph No. [0046])
[Patent Document 4] JP-11-109831A (Claims 3 and 8)
[Patent Document 5] JP-2000-66607A (Claims 1, 3, and 6)
[Patent Document 6] JP-2003-181931A (Claims 1 and 2, Paragraph No. [0018])
[Patent Document 7] JP-2001-198982A (Claim 1)

### DISCLOSURE OF THE INVENTION

### PROBLEMS TO BE SOLVED BY THE INVENTION

It is therefore an object of the present invention to provide a resin label which is easily bondable to a resin shaped article without deteriorating in a laser weldability thereof, and is capable of effectively masking (or covering) the resin shaped article used as a substrate, and a shaped composite article in which the resin label is bonded to the resin shaped article.

It is another object of the present invention to provide a resin label which is firmly bondable to a resin shaped article without an adhesive, and is excellent in the recycling property (recycling efficiency), and a shaped composite article using the same.

It is still another object of the present invention to provide a resin label which is easily bondable to a resin shaped article by a laser irradiation, regardless of the laser-absorbability of the resin shaped article as an object to be bonded, and further is capable of effectively masking the substrate, and a shaped composite article using the same.

It is a further object of the present invention to provide a shaped composite article which comprises a resin label and a resin shaped article as an object to be bonded by a laser irradiation with an easy manner, wherein the resin shaped article comprises an laser-absorbing part (laser-absorbable part) formed on a contact surface with the label, and the label is capable of effectively masking a substratum or substrate (material under the label).

### MEANS TO SOLVE THE PROBLEMS

The inventors of the present invention made intensive studies to achieve the above objects and finally found that use of a resin label having a specific transmitting property relative to a laser beam as well as a visible light, the label improves bondability of the label to a resin shaped article by a laser welding without deteriorating the property as a label. The present invention was accomplished based on the above findings.

That is, the laser-weldable label of the present invention is a resin label which comprises at least a resin layer and is affixable (or attachable) to a resin shaped article by a laser welding, wherein the transmittance of the resin layer relative to a laser beam having an oscillation wavelength within the range of 740 to 1100 nm is not less than 20% (e.g., about 20 to 100%), and the total light transmittance of the resin layer relative to a visible light in accordance with American Society for Testing and Materials (ASTM) D1003 is not more than 50% (e.g., about 0 to 50%). The resin layer has a light scattering property, and has a haze value in accordance with ASTM D1003 of not less than 70%.

The label may have a thickness of about 50 µm to 5 mm. A resin constituting the resin layer may comprise usually a thermoplastic resin. The thermoplastic resin may have a compatibility with a resin constituting the resin shaped article.

The resin layer of the label may be capable of masking (or covering) the resin shaped article, and the resin layer may be colored into a chromatic color (e.g., yellow, orange, red, and blue) or an achromatic color (e.g., white, gray, and black). The tinting strength (colorant concentration) of the resin layer can be selected as desired, for example, a white coloring agent may be combined with a chromatic coloring agent.

A label comprising a resin layer alone is capable of transmitting a laser beam, and such a label is sometimes referred to as a laser-transmissive weldable label.

Moreover, the label of the present invention may comprise a printed layer (or printed layer) formed on the surface of the label and having a display (indication or representational) function. The printed layer may comprise a coloring agent having a transmitting property relative to a laser beam. Incidentally, the printed layer may comprise a plurality of the coloring agents in combination.

The label of the present invention may comprise the resin layer and a laser-absorbing (laser-absorbable) part (site or area) which is formed on a surface of the resin layer. Such a label is weldable to the resin shaped article being an object to be bonded by irradiating a laser beam on a contact surface of the laser-absorbing part with the resin shaped article. Moreover, the label having the absorbing part can be bonded to the resin shaped article with a simple manner regardless of the species of the resin shaped article, and therefore broadens options of the resin shaped article. Incidentally, the absorbing part may be a laser-absorbing layer (laser-absorbable layer) formed on a surface of the resin layer. The thickness of the absorbing layer may be about 1 to 40 µm. Moreover, the absorbing layer may be formed by a layer or film (coating layer) containing a laser beam absorbent, and, for example, may be a layer (coating layer) formed from a coating agent (e. g. , an ink, and a paint) containing a laser beam absorbent.

The present invention also includes a shaped composite article which comprises a resin shaped article and the label, wherein the label is bonded to the resin shaped article by a laser welding. The resin shaped article may be a resin shaped article in which a laser beam-absorbable part is formed on at least part of the welding surface of the resin shaped article (the surface to be bonded or to be welded) to the label. Use of such a resin shaped article realizes the welding (bonding or joining) of a laser beam-weldable label (e.g., a laser beam-transmissive weldable label) to the resin shaped article by bringing the label in contact with the side of the absorbing part of the resin shaped article. The absorbing part may be a laser-absorbing layer (laser-absorbable layer) which is formed on a surface to be bonded of the resin shaped article. The thickness of the absorbing layer may be about 1 to 40 µm. Moreover, the absorbing layer may be formed by a layer or film (coating layer) containing a laser beam absorbent, and, for example, may be a layer or film (coating layer) formed from a coating agent (e.g., an ink, and a paint) containing a laser beam absorbent.

The shaped composite article is useful for application of recyclable articles of consumption, particularly, for reusable or returnable application by returning the used product to a material (raw material), for example, is suitable for a toner cartridge used for a laser printer, a compact copying machine, and others.

### EFFECTS OF THE INVENTION

Since the resin label of the present invention comprises at least a resin layer having a specific transmitting property relative to a laser beam, the label can be easily bonded to an object without deteriorating in a laser weldability. Further, since the resin label has a specific transmitting property relative to a visible light, the label does not impair the function as a label. For example, the label can also effectively mask a substrate (e.g., an object to be bonded (resin shaped article)). Moreover, since the label of the present invention is bondable to an object by a laser welding, the label can be strongly bonded or affixed to the object without an adhesive or others. Therefore, the label and the composite shaped article using the same are excellent in recycling efficiency. Furthermore, with respect to the label comprising an a laser beam-absorbable part(e.g., absorbing layer) on a surface of the resin layer, regardless of a laser beam-absorbability of a resin shaped article as an object to be bonded, with the use of a laser beam transmitting property of the resin layer and a laser beam absorbability of the absorbing part, the label can be easily affixed (attached) or bonded (joined) to an object to be bonded by a laser beam irradiation on a contact surface of the absorbing part of the label with the object. Furthermore, since the resin layer has a specific transmitting property relative to a visible light, the label can effectively mask a substrate (an absorbing part and an object to be bonded).

Besides, in a resin shaped article comprising a laser beam-absorbable part (absorbing layer) is formed on a surface thereof, by bringing the absorbing part in contact with a laser weldable label capable of effectively masking a substrate followed by a laser beam irradiation, the resin shaped article can be easily affixed or bonded to the label.

### BRIEF DESCRIPTION OF DRAWINGS

[Fig.1]

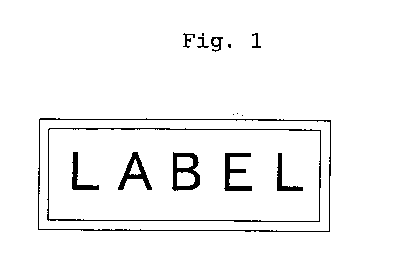

Fig. 1 shows a top view of labels prepared in Examples 18 and 19.

### DETAILED DESCRIPTION OF THE INVENTION

### [Laser weldable label]

The laser weldable label (laser beam-weldable label) of the present invention comprises at least a resin layer (a laser beam-transmittable layer) having a specific transmitting property relative to a laser beam. The label may comprise (i) a resin layer alone, or (ii) a resin layer and a laser-absorbable (laser-absorbing) part (e.g., an absorbing layer) which is formed on a surface on the resin layer and is laser beam-absorbable. Moreover, in order to provide a display function (or an identification function), at least a surface of the laser weldable label may be printed. The present invention encompasses such a printed label.

### (Resin layer)

A resin (base resin) for (constituting) the resin layer is not particularly limited to a specific one, as far as the resin is transmittable relative to a laser beam, and various thermoplastic resins may be employed. The resin may be a crystalline resin or a noncrystalline (or amorphous) resin. The thermoplastic resin may include, for example, a styrenic resin, an acrylic resin (e.g., a poly(alkyl (meth)acrylate) such as a poly(methyl methacrylate), and a polyacrylonitrile), an olefinic resin (e.g., a homo- or copolymer of an olefin, for example, a polyethylene, a polypropylene, and an ethylene-propylene copolymer), a vinyl-series resin (e.g., a vinyl chloride-series resin, a vinyl acetate-series resin , an ethylene-vinyl acetate copolymer, a polyvinyl alcohol, and an ethylene-vinyl alcohol copolymer), a thermoplastic polyester-series resin (e.g., a polyC₂₋₄alkylene terephthalate, a polyC₂₋₄alkylene naphthalate, a copolyester thereof, a polyarylate, and a liquid crystalline polyester), a polyamide-series resin (e.g., a polyamide 6, a polyamide 66, a polyamide 610, a polyamide 11, a polyamide 12, a polyamide 612, a polyamide 6/66, and a polyamide 6/11), a polycarbonate-series resin (e.g., a bisphenol-based polycarbonate such as a bisphenol A-based polycarbonate, and a hydrogenated bisphenol-based polycarbonate), a polyphenylene oxide-series resin, and others.

The styrenic resin may include a polystyrene (e.g., a GPPS), astyrene-acrylic copolymer (e.g., astyrene-methyl methacrylate copolymer, a styrene-(meth)acrylic acid copolymer, and a styrene-acrylonitrile copolymer (AS resin)), a styrene-diene or -olefinic copolymer [e.g., a styrene-butadiene-styrene (SBS) block copolymer, and a styrene-isoprene-styrene (SIS) block copolymer], a rubber-containing styrenic resin [e.g., a high impact resistant polystyrene (HIPS), an acrylonitrile-butadiene rubber-styrene resin (ABS resin), a methyl methacrylate-butadiene rubber-styrene resin (MBS resin), and a methyl methacrylate-styrene resin (MS resin)], and others.

Among these thermoplastic resins, from the viewpoint of strength or light scattering property as a label, it is preferred to use a crystalline resin (e.g., a polyamide, and a crystalline polyester), or, a noncrystalline resin such as a polystyrene (e.g., a GPPS), a rubber-reinforced resin (e.g., a rubber-containing styrenic resin (e.g., an ABS resin), and a styrene-diene or olefinic copolymer), and the like.

The thermoplastic resin may be used singly or in combination. In the case where a plurality of resins are combined, as far as a laser weldability thereof and/or a processability thereof are/is not adversely affected, the combination of resins may be a combination between the same or different species (kind) or type of resins depending on the species of a resin constituting the object to be bonded (or affixed) or the species of the absorbing part. Incidentally, a resin constituting the resin layer preferably has a compatibility with a resin constituting a resin shaped article (an object to be bonded) and/or a resin contained in the absorbing material (absorbing part).

The resin constituting the resin layer is not particularly limited to a specific one, as far as the resin can transmit a laser beam. The resin may be any of transparent, translucent (semitransparent), or opaque. Moreover, the resin may be a resin composition which further contains a coloring agent (colorant). Even in the transparent resin, combination use of a coloring agent ensures an effective functionality as a label.

The resin layer of the resin label may be translucent (semitransparent) or opaque, and the transmittance of the resin layer relative to a laser beam may be, for example, not less than 20% (e.g., about 20 to 100%), depending on an oscillation wavelength of a laser beam to be used. Incidentally, in the present description, the phrase "the transmittance relative to a laser beam of not less than 20%" means that the transmittance is not less than 20% relative to a laser beam selected from laser beams having an oscillation wavelength within the wavelength range of 740 to 1100 nm (preferably 740 to 1064 nm). That is, it is not necessary to have the transmittance of not less than 20% relative to the whole wavelength range. The transmittance of the resin layer relative to a laser beam may be preferably not less than 25% (about 25 to 100%), and more preferably not less than 30% (about 30 to 100%). Moreover, even if the transmittance of the resin layer relative to the laser beam is about 20 to 70%, the resin layer realizes efficient welding of the label.

In the case where the resin layer comprises a resin composition containing the coloring agent, as the coloring agent, there may be used a laser beam-transmittable chromatic or achromatic coloring agent (or a laser beam-nonabsorbable coloring agent). The coloring agent may include, for example, a white colorant (e.g., an inorganic pigment such as titanium oxide(white titanium pigment), calcium carbonate, zinc oxide, zinc sulfide, or a lithopone), a yellow pigment [e.g., an inorganic pigment such as cadmium yellow, chrome yellow, zinc chromate, or ocher, an organic pigment such as hansa yellow, benzidine yellow, or pigment yellow], an orange pigment, a red pigment [e.g., an inorganic pigment such as red iron oxide, invar, cadmium red, or minium (e.g., trilead tetraoxide, and red lead), and an organic pigment such as permanent red, lake red, Watchung red, or brilliant carmine 6B], a blue pigment [e.g., an inorganic pigment such as Prussian blue, ultramarine, cobalt blue (Thenard's blue), and an organic pigment such as phthalocyanine blue], a green pigment [e.g., an inorganic pigment such as chrome green, and an organic pigment such as phthalocyanine green], and an organic colorant (dye or pigment) such as an azo-series colorant, an azo-series metal-containing colorant, a naphtholazo-series colorant, an azo lake-series colorant, an azomethine-series colorant, an anthraquinone-series colorant, a quinacridone-series colorant, a dioxazine-series colorant, a diketopyrrolo-pyrrole-series colorant, an anthrapyridone-series colorant, an isoindolinone-series colorant, an indanthrone-series colorant, a perinone-series colorant, a perylene-series colorant, an indigo-series colorant, a thioindigo-series colorant, a quinophthalone colorant, a quinoline-series colorant, a benzimidazolone-series colorant, or a triphenylmethane-series colorant. Moreover, as a black-series coloring agent, there may be used a known or commercially available black colorant which is laser beam-nonabsorbable. Such a black-series coloring agent is, for example, available from Orient Chemical Industries, Ltd. under trade names of "eBINDLTW-8170C", "eBINDLTW-8012", "eBINDLTW-8620C", "eBINDLTW-8630C", "eBINDLTW-8400C", "eBINDLTW-8950C", "eBINDLTW-8200", "eBINDLTW-8300", and "eBINDLTW-8250C", and is suitably usable.

As the coloring agent, the above-exemplified colorant may be used singly, or a plurality of the coloring agents may be used in combination for adjusting to have a desired color tone. For example, by utilizing a subtractive mixture process, a resin can be colored (or pigmented) (e.g., colored into a black) with a plurality of the coloring agent different in hue (e. g. , three primary colors). Moreover, a white coloring agent may be also combined with a chromatic coloring agent. The coloring agent may have a light scattering property. Use of such a coloring agent (e.g., a pigment such as titanium oxide) realizes a label having a light scattering property, and the label can also effectively mask a resin shaped article as a substrate.

Incidentally, the color of the resin layer is not particularly limited to a specific one, and if necessary, may be a color which is capable of masking a substrate (a resin shaped article being an object to be bonded and/or an absorbing part). The color of the resin layer may be distinctly different from a color of the object, or may be similar to a color of the object. Such a label may be colored into a chromatic color (e.g., yellow, orange, red, and blue) or an achromatic color (e.g., white, gray, and black).

The proportion of the coloring agent is not particularly limited to a specific one, and may be suitably selected depending on the species of the resin or the coloring agent, the oscillation wavelength of the laser beam, and/or the color of the object to be bonded. For example, the proportion of the coloring agent may be about 0.0001 to 10 parts by weight, preferably about 0.001 to 7 parts by weight, and more preferably about 0.01 to 5 parts by weight, relative to 100 parts by weight of the resin.

In order to effectively mask the substrate (the resin shaped article), the total light transmittance of the resin layer of the resin label relative to a visible light in accordance with ASTM D1003 may be, for example, not more than 50% (e.g., about 0 to 50%), preferably not more than 30% (e.g., about 0 to 30%), and more preferably not more than 20% (e.g., about 0 to 20%).

Moreover, the haze value of the resin layer of the resin label determined in accordance with ASTM D1003 (which is calculated by the diffuse transmittance/the total light transmittance), and may be not less than 70% (e.g., about 70 to 100%), preferably not less than 80% (e.g., about 80 to 100%), and more preferably about 90 to 100%. The resin layer having such a haze value also has a light scattering property, and can validly mask the substrate without deteriorating in a laser weldability.

The resin layer may contain, if necessary, other additive(s), for example, a compatibilizer, a flame retardant, a filler (e.g., a glass fiber, a carbon fiber, and a metal filler), a stabilizer (e.g., an antioxidant), a lubricant, a dispersing agent, a foaming agent (blowing agent), an antibacterial agent, and others.

### (Absorbing part)

The absorbing part is weldable by absorbing a laser beam for welding or bonding a resin label to an object. The absorbing part may be formed by affixing (adhesion) with use of spreading or coating the laser beam absorbent (e.g., coating a dispersion or solution of the laser beam absorbent) on a surface of the resin layer. The absorbing part usually comprises a resin composition containing the laser beam absorbent, the resin (resins exemplified in the paragraph of the resin layer, in addition, practically a conventional resin used as a coating agent such as an ink or a paint (e.g., a ketone resin, and a terpene resin)). In the label having such an absorbing part, the label can be welded by a laser beam irradiation on a contact surface of the absorbing part of the label with the resin shaped article.

Incidentally, the distribution pattern of the absorbing part is not particularly limited to a specific one, and the absorbing part may be distributed over the whole of one surface of the resin layer, distributed as a uniform or ununiform layer structure, or wholly or partially distributed or scattered (or dispersed) on a surface of the resin layer. Moreover, the absorbing part may be distributed in a specific shape (or configuration), for example, a linear form, a curved form, a circular form, and a polygonal form, or may be a shape (or configuration) which is coordinated with the irradiation position of the laser beam (for example, a shape such as a plurality of parallel lines, or a lattice form). Among these distribution forms, a layered absorbing part (or absorbing body or absorbing layer) is usually formed on one surface of the resin layer in many cases. The absorbing layer may be sufficient to contain the laser beam absorbent, usually may comprise a resin composition containing the laser beam absorbent and a resin (a base resin). Moreover, the absorbing layer or film may be a coating layer containing the laser beam absorbent.

The laser beam absorbent may be selected depending on the wavelength of the laser beam, and may include an inorganic or organic colorant having absorbability in the wavelength range of the laser beam. The laser beam absorbent may usually include a pigment (e.g., a black pigment) such as a carbon black (e.g., acetylene black, lampblack, thermal black, furnace black, channel black, and Ketjen black), titanium black, black iron oxide, or aniline black, and in addition, a dye such as nigrosine, phthalocyanine, porphyrin, a cyanine-series compound, perylene, quaterrylene, a metal complex, an azo dye, anthraquinone (anthraquinone dye), a squaric acid derivative, or an immonium dye. These laser beam absorbents may be used singly or in combination. Incidentally, the average particle size of the pigment may be, for example, selected from a wide range of about 10 nm to 3 µm (preferably about 10 nm to 1 µm). The primary particle size of the carbon black may be, for example, about 10 to 100 nm, and preferably about 15 to 90 nm. The proportion of the laser beam absorbent in the absorbing layer comprising the resin composition may be about 0.1 to 10 parts by weight, preferably about 0.3 to 7 parts by weight, and more preferably about 0.5 to 5 parts by weight, relative to 100 parts by weight of the base resin. Incidentally, the absorbing layer may contain the laser beam absorbent as the coloring agent, and may further contain other coloring agent (s) (e.g., an inorganic or organic colorant).

In the absorbing part (absorbing layer) comprising the resin composition, the base resin preferably has a compatibility with the resin constituting the object to be bonded and/or the resin constituting the resin layer. The preferred base resin includes a crystalline resin (e. g. , a polyamide , a crystalline polyester, and a ketone resin), or a noncrystalline resin such as a polystyrene (e.g., a GPPS), a rubber-reinforced resin (e.g., a rubber-containing styrenic resin such as an ABS resin, and a styrene-diene or -olefinic copolymer), and the like.

The thickness of the absorbing layer can be selected from the range in which bondability of the absorbing layer to the object is not deteriorated, and may be, for example, about 0.5 to 50 µm, preferably about 1 to 40 µm, and more preferably about 2 to 30 µm. The thickness ratio of the absorbing layer relative to the resin layer may be, for example, [absorbing layer/resin layer] = about 0.001/100 to 20/100, preferably about 0.005/100 to 15/100, and more preferably about 0.01/100 to 10/100.

Moreover, if necessary, the absorbing part (or absorbing layer) may contain other additive(s) exemplified in the paragraph of the resin layer.

According to the present invention, in the label comprising the resin layer alone, the whole label can transmit a laser beam as a whole. In usual cases , the label can be welded to a laser beam-absorbable (laser-absorbable) resin shaped article by a laser beam irradiation. Moreover, in the label comprising the resin layer and the absorbing part, a laser beam which transmits through the resin layer is absorbed by the absorbing part to bond or weld the absorbing part of the label to the resin shaped article as the object on the contact surface. Therefore, the label having the absorbing part can be conveniently and efficiently bonded or welded to the object regardless of the laser beam-absorbability of the object.

Moreover, since the resin label of the present invention has a specific transmitting property relative to the laser beam and the visible light as well as comprises at least a resin layer having a specific light scattering property, the label can be compatible of a laser weldability with a substrate-masking property even in the case where a colored layer is not particularly disposed on the surface (viewing side) of the label.

The thickness of the resin layer or the label (in the case where the label has the absorbing layer, the total thickness of the resin layer and the absorbing layer) can be selected from the range of, for example, about 50 µm to 5 mm, preferably about 70 µm to 3 mm (e.g., about 100 µm to 1 mm), more preferably about 150 µm to 1 mm (e.g., about 510 µm to 1 mm), and particularly about 200 to 900 µm (e.g. , about 550 to 900 µm). Incidentally, in the case where resin label comprises the resin layer alone, the opacity of the resin label can be also adjusted by the thickness of the resin label (resin layer) within the range of not inhibiting in the laser beam-transmittance.

The thickness of the label may be uniform or nonuniform on the whole. Moreover, the label may have a hole in part or an uneven structure (irregularity structure) . The label may have a curved surface, or the surface of the label may be sloped (inclined) or tilted at least in part. In usual cases the label practically has a sheet- or film-like (or plate-like) structure.

Further, the shape (shape in a plane view) of the laser weldable label is not particularly limited to a specific one, maybe, for example, polygonal (e. g. , trigonal (three-sided), quadrilateral (four-sided), and trapezoidal), circular, elliptic, and in addition, various shapes in which periphery (surrounding) of the shape is enclosed by straight line and/or curved line (e.g. , shapes modeling various concrete objects such as a block arrow, a star, and a doughnut).

The resin layer (or the label having the monolayer structure composed of the resin layer alone), and the absorbing layer comprising the resin composition may be obtained by mixing (e.g., melt-kneading) each component depending on the requirements (for example, the resin, the coloring agent, the laser-absorbing agent, and the additive) with use of a conventional mixing method with the use of an extruder, a kneader, a mixer, a roller, or other means, and molding the mixture into a sheet or film (or plate) form through a conventional molding method, for example, an extrusion molding, an injection molding, a compression molding, and a blow molding. Moreover, the sheet-like shaped article may be, if necessary, formed into a desired shape by a processing such as dies cutting, or cutting.

Further, the resin label having a laminated structure of the resin layer and the absorbing layer may be prepared by a conventional process for producing a laminated film, for example, a lamination method, a co-extrusion method (e.g., a co-extrusion T-shaped die molding, a co-extrusion circular die molding, and a co-extrusion blow molding), and a coating method.

In the lamination method, the resin label may be prepared by laminating the resin layer molded by the above-mentioned molding method and the absorbing layer by means of a conventional lamination method, for example, a heat lamination or a dry lamination.

Moreover, in the co-extrusion method, the resin label may be prepared by co-extruding resin compositions constituting each layer with the use of a general-purpose die equipped with a feed block, a multi-manifold die, or others. For example, the resin label may be prepared by feeding each resin composition to extruder, and melting the composition with stirring, allowing each resin composition layer to converge in a die for lamination, and extruding the laminated article from the die.

In the coating method, the resin label may be prepared by dissolving or dispersing the resin composition constituting one of the resin layer and the absorbing layer in a solvent to prepare a liquid coating composition, flow casting or coating the coating composition to the other (e.g., a sheet- or film-like resin layer molded by the above-mentioned molding method) through a conventional flow casting or coating method (for example, a roller coating, an air knife coating, a blade coating, a rod coating, a bar coating, a comma coating, a graver coating, and a silk screen coating), and drying the resulting matter. Moreover, by a spray coating, the liquid coating composition may be applied on the surface of the other resin layer. As the solvent, there may be used an organic solvent such as an aromatic hydrocarbon such as toluene; a nitrile such as acetonitrile; an amide such as dimethylformamide; a sulfoxide such as dimethyl sulfoxide; an alcohol (e.g., an alkanol such as ethanol; and an aralkyl alcohol such as benzylalacohol); aglycol-series solvent; an ester-series solvent; or a mixed solvent thereof; and others. Any of the resin layer and the absorbing layer may be formed by the coating method. In usual cases, a film- or sheet-like resin layer is practically coated with the liquid coating resin composition constituting the absorbing layer.

Moreover, in the coating method, a layer (a coating layer) may be formed by coating at least part of one surface of the resin layer with a coating agent (e.g. an ink and/or a paint) containing the laser-absorbing agent. In many cases, such a coating agent usually contains the laser-absorbing agent, and in addition, a conventional component(s) used for an ink or a paint, for example, a solvent (e.g., the above-mentioned solvent), a resin component (e.g., a ketone resin, and a terpene resin, in addition to the above-mentioned resin), an additive (e.g., an organic acid such as oleic acid), and others.

Incidentally, on at least a surface of the resin label, a character or an image can be printed (including copied, transferred, and the like) by a conventional method. Moreover, the character, the image, and the like may be formed on the surface of the label by using a laser beam-transmitting (or transmittable) coloring agent (e.g. , coloring agents exemplified in the paragraph of the resin layer). Further, the label may be provided with unevenness (e.g., braille points (or type)) on a surface thereof.

### (Printing)

The print (or printed part) to be affixed on at least the surface of the laser weldable label may have a display function (or an identification function), or may be an identifier (e.g., a dot, a symbol, a character, a symbol or character string, a bar code, a figure, and an image) having a specific shape (or configuration) or may be a simple coloring (e.g., a coloring having a color-coding function). The printed part may be formed all over the surface of the label, or on part of the surface.
Incidentally, in the label having the absorbing part, the printed part of the label is formed on at least the surface (a viewing side or visible surface) of the label, and the absorbing part is formed on the back side (a surface to be welded) of the label.

The printed part is usually formed as a layer(s) on the surface of the label in many cases, and such a printed part is sometimes referred to as a printed layer. The printed part (or printed layer) may be usually formed through the use of a conventional printing method, for example, a label-printing method. For example, the printed part (or printed layer) may be formed on the label by pressing a thermal head on an ink ribbon, and heating the ink ribbon. Incidentally, the printed part (or printed layer) may be formed on at least the surface of the label prior to laser welding, or may be formed thereon in the process of laser welding (for example, the printed part may be welded and simultaneously formed by a laser beam irradiation).

The printed part (printed layer) usually contains a chromatic or achromatic coloring agent (e.g., a dye, a pigment, and a mixed coloring agent). In view of laser weldability, a coloring agent having transmitting property to a laser beam is preferred.

As the coloring agent having transmitting property to a laser beam, there may be used colorants exemplified in the paragraph of the resin layer. Such a coloring agent may be used singly, or from the viewpoint of laser beam transmitting property and display or identification (or discrimination), a plurality of coloring agents having transmitting property to laser beams may be used in combination, if necessary.

### [Shaped composite article]

The shaped composite article (or composite molded (or shaped) article) of the present invention comprises a resin shaped article as an object to be bonded, and the resin label bonded to the resin shaped article by a laser welding.

The resin constituting the resin shaped article is not particularly limited to a specific one, and various thermoplastic resins exemplified in the paragraph of the label may be used. It is preferred to form the resin shaped article from a resin having compatibility with a resin constituting the label. The resin for the label and the resin for the object may be a combination of the same (or similar) kind (species or type) of resins, or may be a combination of alloys (or blends) each containing the same (or similar) kind or type of resins.

The object to be bonded may contain an absorbing agent to a laser beam (e.g., laser-absorbing agents exemplified in the paragraph of the absorbing part) depending on the species of the label. That is, the object to be bonded to the label composed of the resin layer alone may be welded to the label by absorption of a laser beam. In usual cases, the object may be (i) formed from a resin composition comprising the resin and the laser-absorbing agent, or may be (ii) a resin shaped article in which the laser-absorbing part (e.g. , an absorbing layer) is formed on at least part of the surface to be bonded to the label. The latter resin shaped article may have absorbability or nonabsorbability to the laser beam. Moreover, the object to be bonded to the label comprising the resin layer and the absorbing part (absorbing layer) may have absorbability or nonabsorbability to the laser beam, and may or may not contain the laser-absorbing agent. Incidentally, the object (or the resin or resin composition constituting the object) may contain the laser-absorbing agent as a coloring agent (colorant). The distribution (dispersing) pattern of the laser-absorbing agent in the object is not particularly limited to a specific one. The laser-absorbing agent may be uniformly (homogeneously) distributed all over the object, or may be nonuniformly (inhomogeneously) distributed (or dispersed) (e.g., may be locally distributed on the surface or others), and is usually distributed on at least the surface to be bonded (or welded) in many cases. Moreover, the laser-absorbing agent may be distributed all over the surface to be bonded uniformly or in inhomogeneous layers, or may be wholly or partly distributed on the surface to be bonded by dispersion.

The proportion of the laser-absorbing agent may be, relative to 100 parts by weight of the resin constituting the object, about 0.01 to 10 parts by weight, preferably about 0.1 to 5 parts by weight (e.g., about 0.3 to 4 parts by weight), and more preferably about 0.5 to 3 parts by weight.

The object (or the resin or resin composition constituting the object) may contain a conventional coloring agent (for example, a coloring agent other than the laser-absorbing agent (other coloring agent), for example, a commercially available coloring agent). The color tone of the object may be desirably adjusted by suitably selecting the species or proportion of the coloring agent and/or the laser-absorbing agent. The species of such other coloring agent is not particularly limited to a specific one, and may include various inorganic or organic colorants used for coloring of resin, for example, a white colorant (e.g., titanium oxide (white titanium pigment)), a yellow colorant (e.g., a benzidine yellow), an orange colorant (e.g., a hansa yellow), a red pigment (e.g., a lake red), a blue pigment (e. g. , a phthalocyanine blue), a green pigment (e.g., a phthalocyanine green), and others. As such other coloring agent, there may be used coloring agents exemplified in the paragraph of the resin layer. The proportion of the coloring agent is not particularly limited to a specific one, and may be, relative to 100 parts by weight of the resin, for example, about 0.001 to 10 parts by weight, and preferably about 0.01 to 5 parts by weight.

The absorbing part (or absorbing layer) may be formed in the same manner as the absorbing part described in the paragraph of the label. Moreover, the thickness of the absorbing layer may be also selected from the same range as that of the absorbing layer exemplified in the paragraph of the label. Incidentally, the absorbing part may be distributed in a specific shape (or configuration), for example, a linear form, a curved form, a circular form, and a polygonal form, or may be a shape (or configuration) which is coordinated with the irradiation position of the laser beam (for example, a shape such as a plurality of parallel lines, or a lattice form).

The resin shaped article may be molded by a conventional method, for example, the same mixing method and molding method as methods exemplified in the paragraph of the label. The shape of the resin shaped article is not particularly limited to a specific one as far as at least part of the shaped article has a contact surface (e.g., a flat surface) sufficient to affix (or attach) or bond to the resin label. The shape of the resin shaped article may be a two-dimensional shape (e.g., a plate form) or a three-dimensional shape.

The resin shaped article as the object is not particularly limited to a specific one, and may include a variety of shaped articles such as a component [e.g., a housing, a case, a cover, a door, and a cartridge (such as an ink cartridge or a toner cartridge)] of household or office automation (OA) equipment, and in addition, an automotive part, a domestic (household) article, and a building material. Examples of the household or office automation (OA) equipment may include, for example, equipment such as a computer, a word processor, a printer, a copying machine, a facsimile equipment, a telephone, or a mobile device (e.g., a cellular phone, and a personal digital assistance (PDA)), and home electric appliances such as a television, a video cartridge (cassette) recorder, a DVD (digital versatile disc) player, an air conditioner, a refrigerator, or a washing machine.

The shaped composite article may be produced by bonding the resin shaped article as an object and the resin label by a laser welding. The shaped composite article may be, for example, obtained as a united form by the following manner: the resin shaped article and the resin label are brought into contact with each other at faces of at least each joining flat-area (part), closely contacted at each joining faces through partly fusing the interface of the article and the label by a laser irradiation, and finally joined or bonded by cooling to make a united form. Incidentally, in the resin label having the absorbing part, the label and the resin shaped article are bonded by the following manner: the label and the resin shaped article are disposed so that the side of the absorbing part is contacted on the resin shaped article, and irradiated with a laser beam from the side of the resin layer to at least partly fuse the absorbing part or a peripheral part thereof.

As the light source of the laser beam to be used for laser welding, there may be utilized, for example, a solid-state laser (e.g., Nd: YAG excitation, and semiconductor laser excitation), a semiconductor laser or a laser diode (650 to 980 nm), a tunable diode laser (630 to 1550 nm), and a ti-sapphire laser (Nd: YAG excitation, 690 to 1000 nm) in the range that absorption to the resin layer of the resin label is inhibited. Among these laser beams, a laser beam source having an oscillation wavelength in a range of a wavelength longer than a visible light, for example, in about 740 to 1600 nm (e.g., about 740 to 1100 nm) is usually employed.

According to the present invention, in each case, since the resin label and the shaped article are bonded to each other by a laser welding without using an adhesive (exclusively or free from an adhesive), or the like, it is unnecessary to separate the label from the shaped article upon recycling. Moreover, the bonding strength (intensity) may be controlled by adjusting the strength of the laser beam or the irradiation time (e.g., light exposure) thereof. For example, the bonding strength may be reduced by a relatively small light exposure. Therefore, if necessary, the label can be separated from the resin shaped article upon recycling. Further, since the resin label has a specific transmitting property to a laser beam and a visible light, the laser weldability is not deteriorated. Accordingly, if necessary, the label can mask (or cover) the shaped article as the substrate, and is excellent in functional capability as a label. In particular, the present invention is suitably used for a toner cartridge or container as a shaped composite article.

### INDUSTRIAL APPLICABILITY

The resin label of the present invention is useful for easily bonding to a component of various equipment, a resin shaped article, and others for displaying (or exhibiting) information. The shaped composite article in which the resin label is bonded to the resin shaped article is, for example, useful for a variety of resin shaped articles such as a part (e.g., a housing, a case, a cover, a door, andacartridge) constituting household or office automation (OA) equipment, e.g., equipment such as a computer, a word processor, a printer, a copying machine, a facsimile equipment, a telephone, or a mobile device, and various home electric appliances, and in addition, an automotive part, a domestic (household) article, and a building material.

### EXAMPLES

The following examples are intended to describe this invention in further detail and should by no means be interpreted as defining the scope of the invention.

### Examples 1 to 12 and Comparative Examples 1

### (1) Preparation of label

By using resins and coloring agents shown in Table 1, Sheets A to M, each having a thickness shown in Table 1, were prepared. The total light transmittance, the haze value, and the laser beam transmittance of thus obtained sheets were evaluated, and the results are shown in Table 1. Each sheet was cut off to a size of 20 mm in length and 60 mm in width to give a label.

### (2) Laser welding

A black-colored high impact polystyrene (HIPS) (carbon black (CB) content of 0.5% by weight) and a black-colored acrylonitrile-styrene-butadiene (ABS) resin (carbon black (CB) content of 0.5% by weight) were used to form a shaped article sample (100 mm in length, 100 mm in width and 2 mm in thickness). On the shaped article sample, a label made in the above step (1) was disposed, and further a transparent glass plate was placed as a weighting on the label. The shaped article sample and the label were welded by using a 120W laser welding machine (a laser diode, a wavelength of 940nm) manufactured by Fine Device Co., Ltd. (welding condition I: output of 5 W, scanning rate of 45 mm/second, and welding condition II : output of 5 W, scanning rate of 15 mm/second) . The results are shown in Table 2. Incidentally, the masking property (or covering property) of the label was visually confirmed. As the above-mentioned HIPS and ABS resin, the same resins as HIPS and ABS used in the sheet preparation were used. Moreover, in Examples 1 to 4, 12 and Comparative Example 1, the HIPS shaped article was used, and in Exampled 5 to 11, the ABS shaped article was used.

(a) Weldability evaluation
   "A": Burnt deposits or traces of laser were hardly recognized in appearance, and the shaped article and the label were finely and precisely welded.
   "B": Although burnt deposits or traces of laser were recognized in appearance, the shaped article and the label were welded.
   "C": The shaped article and the label were not welded.
(b) Peeling test of welded piece
   "A": Although an attempt is conducted at separating the edge of the label by hand, the label cannot be separated from the shaped article due to strong welding therebetween.
   "B": An attempt is conducted at separating the edge of the label by hand, and the label is easily separated from the shaped article.
   "C" : The peeling test cannot be conducted because the label and the shaped article are not welded.
(c) Masking property
   "A": The substrate (and absorbing layer) is not visible.
   "B": The substrate (and absorbing layer) is visible.

### Example 13

### (1) Preparation of label having a formed absorbing layer

By amultilayer extrusionmethod, an absorbing layer (having a thickness of 10 µm) containing 100 parts by weight of the same HIPS as described above and 2 parts by weight of a carbon black (CB)-containing master batch (PS-M SSC 98H 822D Black, manufactured by Dainichiseika Color & Chemicals Mfg. Co. , Ltd.) was formed on a resin layer having the same formulation as that of Sheet C described in Table 1 to make a two-layered label. Incidentally, the thickness of the resin layer was made 339 µm as is the case with Sheet C. In this Example, a sheet constituting the resin layer is considered as "Sheet C" for convenience. Incidentally, the total light transmittance, the haze value, and the laser beam transmittance of the resin layer can be referred to those of Sheet C, respectively.

### (2) Laser welding

Moreover, an object was produced in the same manner as Example 3 except for using a HIPS instead of the carbon black-containing HIPS in Example 3, and the label and the object were welded in the same manner as Example 3. The results of the welding evaluation in each condition and the peeling test of the welded piece are shown in Table 3.

### Example 14

### (1) Preparation of label having a formed absorbing layer

A carbon black (CB) -containing HIPS film (thickness of 20 µm, absorbing layer) was placed on Sheet C (resin layer) in Table 1, and the both were heat-laminated to make a two-layered label.

### (2) Laser welding

Moreover, an object was produced in the same manner as Example 3 except for using a HIPS instead of the carbon black (CB)-containing HIPS in Example 3, and the label and the object were welded in the same manner as Example 3. The results of the welding evaluation in each condition and the peeling test of the welded piece are shown in Table 3.

### Example 15

### (1) Preparation of label having a formed absorbing layer

A polystyrene (GPPS) which was black-colored with 5% by weight of a carbon black (CB) was dissolved in toluene to prepare a liquid coating composition. The coating composition was coated on a label formed from Sheet C by a mayer bar so as to have a thickness of the coating composition after drying being 3 µm, and was dried to make a two-layered label. Incidentally, as the GPPS, the same resin as the GPPS used in preparation of Sheet A or B was used.

### (2) Laser welding

An object was produced in the same manner as Example 3 except for using HIPS instead of the carbon black (CB)-containing HIPS in Example 3, and the label and the object were welded in the same manner as Example 3. The results of the welding evaluation in each condition and the peeling test of the welded piece are shown in Table 3.

### Example 16

### (1) Preparation of coating agent (absorbing ink) for absorbing layer

The following all components were mixed at 40°C and dissolved uniformly, and filtrated to give a coating agent.

| Formulation of absorbing ink: | |
|---|---|
| Nigrosine dye (manufactured by Orient Chemical Industries, Ltd. , trade name "NIGROSINE BASE EX") | 6 parts byweight |
| Ethanol | 69 parts by weight |
| Benzyl alcohol | 5 parts by weight |
| Oleic acid | 10 parts by weight |
| Ketone resin (manufactured by Arakawa Chemical Industries, Ltd., "KETONE RESIN K-90") | 10 parts byweight |

### (2) Preparation of label having a formed absorbing layer

The above coating agent (absorbing ink) was coated on a label formed from Sheet C by a bar coater so as to have a thickness of the coating agent after drying being was 10 µm, and was dried to make a two-layered label.

### (3) Laser welding

An object was produced in the same manner as Example 3 except for using HIPS instead of the carbon black (CB)-containing HIPS in Example 3, and the label and the object were welded in the same manner as Example 3. The results of the welding evaluation in each condition and the peeling test of the welded piece are shown in Table 3.

### Example 17

### (1) Preparation of object having a formed absorbing layer

The same absorbing ink as in Example 16 was coated on one surface of the same object as in Example 10 by a bar coater so as to have a thickness of the ink after drying being was 10 µm, and was dried to form an absorbing layer.

### (3) Laser welding

An object was produced in the same manner as Example 3 except for using the above-mentioned object having an absorbing layer instead of the carbon black (CB)-containing HIPS in Example 3, and the label and the object were welded in the same manner as Example 3. The results are shown in Table 3.

### Example 18

### (1) Preparation of colored ink for printed layer

The following all components were mixed at 40°C and dissolved uniformly, and filtrated to give a colored ink (a blue ink) having transmitting property to a laser beam.

| Formulation of colored ink: | |
|---|---|
| Ditolylguanidine salt of C. I. Acid Blue 80 (anthraquinone acidic dye) | 8 parts by weight |
| Ethanol | 72 parts by weight |
| Benzyl alcohol | 14 parts byweight |
| Terpene resin (manufactured by Yasuhara Chemical Co. , Ltd., "YS RESIN TO") | 3 parts byweight |
| Ketone resin (manufactured by Arakawa Chemical Industries, Ltd. , "KETONE RESINK-90") | 3 parts by weight |

### (2) Preparation of label

On a surface (one surface) of a label formed from Sheet C, the character string "LABEL" as shown in Fig. 1 was printed with the blue ink prepared in the above step by a label printer.

### (3) Laser welding

In the same manner as Example 3, a black-colored HIPS (carbon black (CB) content of 0.5% by weight) was used to form a shaped article sample (100 mm in length, 100 mm in width and 2 mm in thickness). On the shaped article sample, a label made in the above step (2) was disposed, and further a transparent glass plate was placed as a weighting on the label. The almost whole surface of the label was irradiated with a laser beam by using a 120 W laser welding machine (a laser diode, a wavelength of 940 nm) manufactured by Fine Device Co. , Ltd. to weld the label and the shaped article (welding condition (i): output of 5 W, scanning rate of 45 mm/second, and welding condition (ii): output of 5 W, scanning rate of 15 mm/second). The results are shown in Table 3. Incidentally, after laser welding, the character string "LABEL" of the label surface could be visually recognized in vivid blue without generation of burnt deposits.

### Example 19

### (1) Preparation of colored ink for printed layer

The following all components were mixed at 40°C and dissolved uniformly, and filtrated to give a colored ink (a black ink) having transmitting property to a laser beam.

| Formulation of colored ink: | |
|---|---|
| Black transmission coloring agent (trade name "eBIND LTW8170C" manufactured by Orient Chemical Industries, Ltd.) | 5 parts byweight |
| Ethanol | 75 parts by weight |
| Benzyl alcohol | 14 parts by weight |
| Terpene resin (manufactured by Yasuhara Chemical Co. , Ltd. , "YS RESIN TO") | 3 parts byweight |
| Ketone resin (manufactured by Arakawa Chemical Industries, Ltd., "KETONE RESIN K-90") | 3 parts by weight |

### (2) Preparation of label

On a surface (one surface) of a label formed from Sheet C, the character string "LABEL" as shown in Fig. 1 was printed with the black ink prepared in the above step (1) by a label printer.

### (3) Laser welding

In the same manner as Example 3, a black-colored HIPS (carbon black (CB) content of 0.5% by weight) was used to form a shaped article sample (100 mm in length, 100 mm in width and 2 mm in thickness) . On the shaped article sample, a label made in the above step (1) was disposed, and further a transparent glass plate was placed as a weighting on the label. The almost whole surface of the label was irradiated with a laser beam by using a 120 W laser welding machine (a laser diode, a wavelength of 940 nm) manufactured by Fine Device Co., Ltd. to weld the label and the shaped article (welding condition (i): output of 5 W, scanning rate of 45 mm/second, and welding condition (ii): output of 5 W, scanning rate of 15 mm/second). The results are shown in Table 3. Incidentally, after laser welding, the character string "LABEL" of the label surface could be visually recognized in vivid black without generation of burnt deposits.

[Table 1]

**Table 1**

| Sheet | | | | A | B | C | D | E | F | G | H | I | J | K | L | M |
|---|---|---|---|---|---|---|---|---|---|---|---|---|---|---|---|---|
| | Resin | | | | | | | | | | | | | | | |
| | | HIPS (parts by weight) | | 74.0 | 85.0 | 100.0 | 100.0 | | | | | | | | 74.0 | 74.0 |
| | | GPPS (parts by weight) | | 18.0 | 15.0 | | | | | | | | | | 18.0 | 18.0 |
| | | ABS (parts by weight) | | | | | | 97.0 | 98.0 | | | 95.0 | 97.5 | 99.0 | | |
| | | PBT (parts by weight) | | | | | | | | 97.5 | 99.0 | | | | | |
| | Coloring agent | | | | | | | | | | | | | | | |
| | | MB1 (parts by weight) | | 8.0 | | | | | | | | | | | 8.0 | 8.0 |
| | | MB2 (parts by weight) | | | 2.5 | 2.0 | 2.0 | | | | | | | | | |
| | | Titanium oxide (parts by weight) | | | | | | 3.0 | 2.0 | 2.5 | 1.0 | | | | | |
| | | Zinc sulfide (parts by weight) | | | | | | | | | | 5.0 | 2.5 | 1.0 | | |
| | | Yellow pigment (parts by weight) | | | | | | | | | | | | | 2.0 | |
| Resin layer thickness (µm) | | | | 208.0 | 571.0 | 339.0 | 812.0 | 450.0 | 420.0 | 400.0 | 208.0 | 390.0 | 440.0 | 460.0 | 208.0 | 804.0 |
| Total light transmittance (%) | | | | 11.7 | 8.3 | 16.0 | 7.6 | 11.6 | 16.5 | 11.5 | 18.2 | 9.7 | 15.2 | 21.6 | 10.1 | 2.8 |
| Haze (%) | | | | 93.7 | 93.5 | 93.6 | 93.6 | 93.5 | 93.7 | 93.5 | 93.8 | 93.2 | 93.2 | 93.3 | 93.7 | 94.8 |
| Laser beam transmittance (%) | | | 808 nm | 27 | 26 | 41 | 23 | 25 | 33 | 25 | 37 | 24 | 33 | 42 | 23 | 6 |
| | | | 840 nm | 28 | 27 | 42 | 25 | 25 | 33 | 26 | 37 | 25 | 34 | 42 | 26 | 7 |
| | | | 940 nm | 30 | 30 | 44 | 28 | 27 | 36 | 28 | 40 | 28 | 37 | 45 | 28 | 8 |
| | | | 1064 nm | 33 | 33 | 48 | 32 | 31 | 39 | 31 | 42 | 32 | 41 | 49 | 33 | 9 |
| Masking property of sheet | | | | A | A | A | A | A | A | A | A | A | A | A | A | A |

[Table 2]

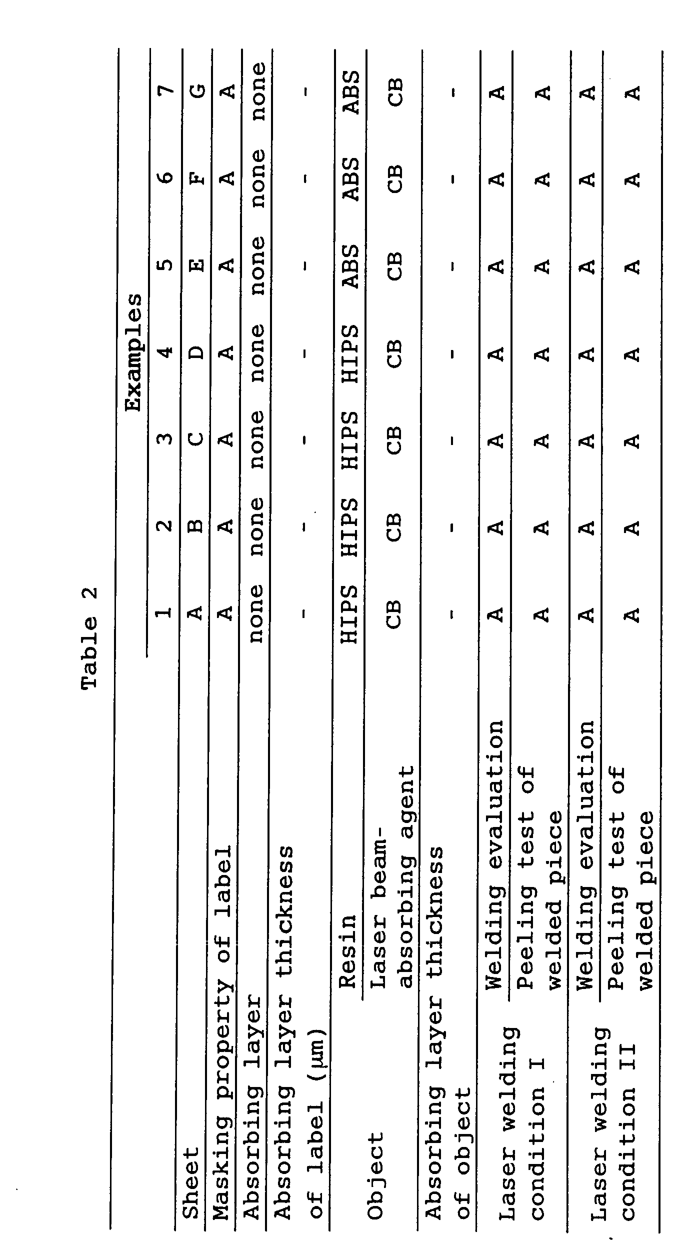

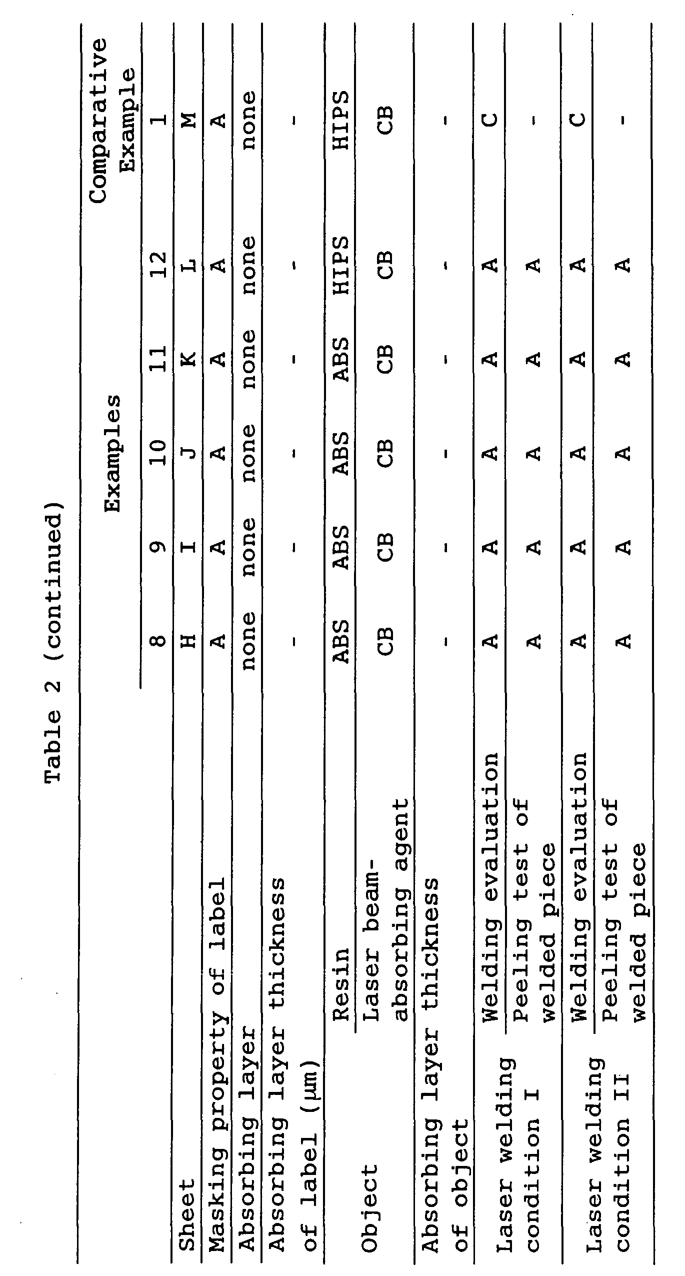

[Table 3]

**Table 3**

| | | Examples | | | | | | |
|---|---|---|---|---|---|---|---|---|
| | | 13 | 14 | 15 | 16 | 17 | 18 | 19 |
| Sheet | | C | C | C | C | C | C | C |
| Masking property of label | | A | A | A | A | A | A | A |
| Absorbing layer of label | | CB-containing HIPS | CB-containing HIPS | CB-containing GPPS | Nigrosine-containing absorbing ink | none | none | none |
| Absorbing layer thickness of label (µm) | | 10 | 20 | 3 | 10 | - | - | - |
| Object | | HIPS | HIPS | HIPS | HIPS | HIPS | CB- containing HIPS | CB-containing HIPS |
| Absorbing layer of object | | none | none | none | none | Coating layer of nigrosine-Containing absorbing ink | none | none |
| Absorbing layer thickness of object (µm) | | | | - | - | 10 | - | - |
| Laser welding condition I | Welding evaluation | A | A | A | A | A | A | A |
| | Peeling test of welded piece | A | A | A | A | A | A | A |
| Laser welding condition II | Welding evaluation | A | A | A | A | A | A | A |
| | Peeling test of welded piece | A | A | A | A | A | A | A |

As apparent from Tables, labels of Examples are firmly welded to resin shaped articles without using an adhesive, and it is difficult to separate the labels from the resin shaped articles by hand. On the other hand, in Comparative Example, the label and the resin shaped article cannot be welded. Incidentally, visual inspection revealed that labels of Examples 1 to 12 and Comparative Example 1 effectively masked the substrate. Moreover, visual inspection revealed that labels of Examples 13 to 19 effectively masked both the black absorbing layer and the substrate.

(1) Incidentally, in sheets of Examples and Comparative Example, the following resins and coloring agents were used.

(i) Resin
      A white high impact polystyrene (HIPS) shown in Table 1, as well as if necessary, a polystyrene (GPPS) and a titanium oxide-containing resin master batch were used, and labels each having a thickness descried in Table 1 were prepared. Concerning each of thus obtained labels, the total light transmittance, the haze value, and the laser beam transmittance were evaluated. The results are shown in Table 1.

(i-1) HIPS: White high impact polystyrene [manufactured by Toyo Styrene Co. , Ltd. , trade name "E640"]
   (i- 2) GPPS: Polystyrene [manufactured by Toyo Styrene Co. , Ltd., trade name "HRM63C"]
   (i-3) ABS: Acrylonitrile-styrene-butadiene resin [manufactured by Nippon A & L Inc., trade name "ST-55"]
   (i-4) PBT: Polybutylene terephthalate [manufactured by WinTech Polymer Ltd., trade name "FP700"]
(ii) Coloring agent
   (ii-1) MB1: Titanium oxide-containing resin master batch [manufactured by Sankyo Chemical Industry Co. , Ltd. , trade name "SCPSM41919 WHITE (Z)"]
   (ii-2) MB2: Titanium oxide-containing resin master batch [manufactured by Polycol Color Industries Co. , Ltd. , trade name "ESHWMD 17266 0025PM"]
   (ii-3) Titanium oxide: manufactured by Ishihara Sangyo Kaisha, Ltd., trade name "R830"
   (ii-4) Zinc sulfide: manufactured by SACHTLEBEN CHEMIE GmbH, trade name "SACHTOLITH HD-S"
   (ii-5) Yellow pigment (C. I. PIGMENT YELLOW 93 (disazo dye), manufactured by Dainichiseika Color & Chemicals Mfg. Co., Ltd., trade name "CHROMOFINE YELLOW 5930")

### (2) Moreover, the light transmittance of the label was measured as follows.

(i) Total light transmittance and haze value
   The total light transmittance (%), and the haze value (%) were measured based on ASTM D1003. Incidentally, as a measuring apparatus, a TC-H3DPK manufactured by Nippon Denshoku Industries Co., Ltd. was used.

(ii) Laser beam transmittance
   A set of 60φ integrating sphere for ultraviolet, visible, and near infrared range was disposed in a spectrophotometer (manufactured by HitachiLtd., "U-3410"), and a test piece was set. The transmittance of the test piece was measured at wavelengths (λ = 808, 840, 940 and 1064 nm).

## Claims

1. A laser-weldable resin label which comprises at least a resin layer and is affixable to a resin shaped article by a laser welding, wherein the resin layer has a light-scattering property, and the transmittance of the resin layer relative to a laser beam having an oscillation wavelength within the range of 740 to 1100 nm is not less than 20%, the total light transmittance of the resin layer relative to a visible light in accordance with ASTM D1003 is not more than 50%, and the haze value of the resin layer in accordance with ASTM D1003 is not less than 70%.

2. A laser-weldable label according to claim 1, which has a thickness of 50 µm to 5 mm.

3. A laser-weldable label according to claim 1, wherein the resin layer comprises a thermoplastic resin.

4. A laser-weldable label according to claim 1, which comprises the resin layer alone.

5. A laser-weldable label according to claim 1, wherein the resin layer comprises a thermoplastic resin which has a compatibility with a resin constituting the resin shaped article.

6. A laser-weldable label according to claim 1, wherein the resin layer is capable of masking the resin shaped article, and is colored into a chromatic color or an achromatic color.

7. A laser-weldable label according to claim 1, which comprises a printed layer formed on the surface thereof, wherein the printed layer has a display function.

8. A laser-weldable label according to claim 7, wherein the printed layer comprises a coloring agent having a transmitting property relative to a laser beam.

9. A laser-weldable label according to claim 1, which comprises the resin layer and a laser-absorbing part formed on a surface of the resin layer, wherein the label is weldable to the resin shaped article by irradiating a laser beam on a contact surface of the laser-absorbing part with the resin shaped article.

10. A laser-weldable label according to claim 9, wherein the absorbing part is a laser-absorbing layer which is formed on a surface of the resin layer, and the thickness of the absorbing layer is 1 to 40 µm.

11. A laser-weldable label according to claim 9 or 10, wherein the absorbing part is a laser-absorbing layer formed by a layer containing a laser beam absorbent.

12. A shaped composite article which comprises a resin shaped article and a laser-weldable label recited in any one of claims 1 to 11, wherein the label is bonded to the resin shaped article by a laser welding.

13. A shaped composite article according to claim 12, wherein the resin shaped article comprises a laser beam-absorbing part formed on at least part of a surface thereof, and the label is bonded to the resin shaped article by irradiating a laser beam on the contact surface of the absorbing part with the label.

14. A shaped composite article according to claim 13, wherein the absorbing part comprises a laser-absorbing layer, and the thickness of the absorbing layer is 1 to 40 µm.

15. A shaped composite article according to claim 13 or 14, wherein the absorbing part comprises a laser-absorbing layer, and the absorbing layer is formed from a layer containing a laser beam absorbent.

16. A shaped composite article according to any one of claims 12 to 15, wherein the resin shaped article is a toner cartridge.
